Europäisches Patentamt

European Patent Office

Office européen des brevets

(11) Veröffentlichungsnummer : **0 086 342**
**B1**

(12) EUROPÄISCHE PATENTSCHRIFT

(45) Veröffentlichungstag der Patentschrift :
28.08.85

(21) Anmeldenummer : 83100360.3

(22) Anmeldetag : 17.01.83

(51) Int. Cl.⁴ : **G 01 M 19/00, G 01 B 17/00,**
**G 21 D 5/08**

(54) Inspektionseinrichtung insbesondere für Dampferzeugerrohre.

(30) Priorität : 29.01.82 DE 3202883

(43) Veröffentlichungstag der Anmeldung :
24.08.83 Patentblatt 83/34

(45) Bekanntmachung des Hinweises auf die Patenterteilung : 28.08.85 Patentblatt 85/35

(84) Benannte Vertragsstaaten :
CH FR GB LI NL SE

(56) Entgegenhaltungen :
EP-A- 0 026 701
DE-C- 2 263 143

(73) Patentinhaber : KRAFTWERK UNION AKTIENGE-
SELLSCHAFT
Wiesenstrasse 35
D-4330 Mülheim (Ruhr) (DE)

(72) Erfinder : Müller, Thomas, Dipl.-Ing.
Am Europakanal 45
D-8520 Erlangen (DE)
Erfinder : Bauer, Rainer
Fasanenweg 23a
D-8522 Herzogenaurach (DE)

(74) Vertreter : Mehl, Ernst, Dipl.-Ing. et al
Postfach 22 01 76
D-8000 München 22 (DE)

## Beschreibung

Die Erfindung betrifft eine Inspektionseinrichtung, insbesondere für Dampferzeugerrohre, mit einer Sonde, die mit Hilfe eines Schubschlauches von einem den Schubschlauch mit Antriebsrädern erfassenden Vorschubgerät bewegt wird.

Bei der aus der DE-C-22 63 143 bekannten Einrichtung der vorgenannten Art erfassen die Antriebsräder des Vorschubgerätes den Schubschlauch über einen Reibschluß. Die damit aufzubringende Vorschubkraft ist aber nicht sehr groß, weil dem Anspreßdruck im Hinblick auf die erwünschte Flexibilität des Schubschlauches Grenzen gesetzt sind. Deshalb können sich Schwierigkeiten ergeben, wenn die Sonde in Bögen oder an Verkrustungen steckenzubleiben droht.

Aufgabe der Erfindung ist es, die vorgenannten Schwierigkeiten zu beseitigen.

Gemäß der Erfindung ist bei einer Inspektionseinrichtung der eingangs genannten Art vorgesehen, daß der Schubschlauch längs einer Mantellinie äquidistante Löcher aufweist und daß mindestens ein Antriebsrad in die Löcher passende Dorne trägt.

Damit ergibt sich ein Formschluß, der größere Kräfte zu übertragen gestattet. Zum Beispiel kann auf diese Weise auch eine sichere Bewegung von Sonden für Ultraschallmessungen erreicht werden, die eine die Reibung vergrößernde Dichtung besitzen, um das zur Ankopplung erforderliche Medium in den Dampferzeugerrohren mit Hilfe der Dichtung festzuhalten.

Die Dorne sind vorzugsweise zugespitzt, um das Eingreifen in die Löcher zu erleichtern. Mit « zugespitzt » sind auch Ausführungsformen gemeint, bei denen das freie Ende der Dorne in eine runde kuppel ausläuft.

Vorzugsweise besitzen die Löcher und Dorne einen kreisförmigen Querschnitt, obwohl die Erfindung im Prinzip auch mit anderen Querschnitten verwirklicht werden kann. Bei kreisförmigen Querschnitten ergibt sich jedoch eine besonders geringe Beanspruchung des üblicherweise aus Kunststoff bestehenden Schlauches, so daß der Verschleiß klein bleibt.

Besonders klein ist der Verschleiß, wenn ein gewisses Übermaß zwischen dem Lochdurchmesser und dem Durchmesser der Dorne vorhanden ist, weil die Dorne dann nur wirksam werden, wenn eine Klemmung des Vorschubschlauches oder der Sonde vorliegt, während die normale Bewegung durch den Reibschluß aufgebracht wird.

Die Distanz zwischen je zwei Löchern ist vorteilhaft so groß wie der Durchmesser des Schubschlauches mit eine möglichen Abweichung von etwa 15 % nach oben oder unten. In diesem Bereich liegende Distanzen haben bei Versuchen gute Ergebnisse gezeigt.

Der Lochdurchmesser sollte 1/3 bis 1/10 der Distanz zwischen je zwei Löchern betragen, weil dann der Eingriff der Dorne bei üblichen Abmessungen der Antriebsräder ohne Schwierigkeiten erfolgt. Im Hinblick auf die zu übertragenden Kräfte ist eine weitere, bei Versuchen bewährte Bemessungsgröße für den Lochdurchmesser 0,5 bis 2,5 der Wanddicke des Schubschlauches.

Die freie Länge der Dorne sollte mindestens annähernd so groß wie die Wanddicke des Schubschlauches sein. Vorzugsweise liegt sie im Bereich des Dorndurchmessers.

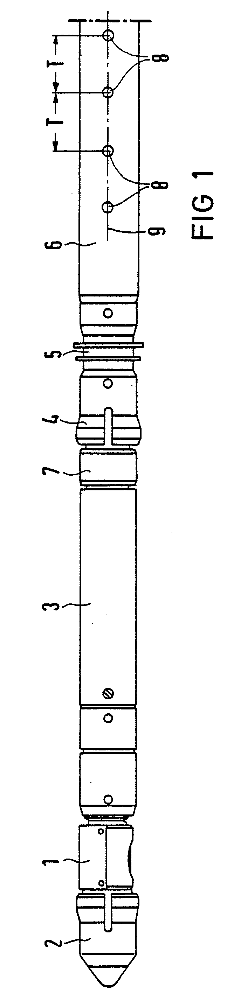

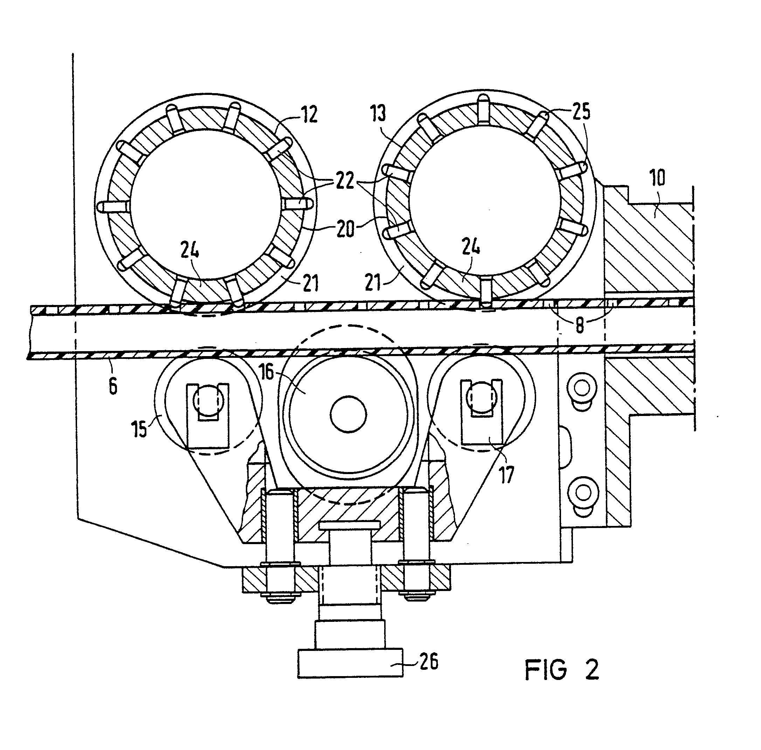

Zur näheren Erläuterung der Erfindung wird anhand der beiliegenden Zeichnung ein Ausführungsbeispiel beschrieben. Dabei zeigt die Fig. 1 die Sonde als Ganzes in einer Seitenansicht und die Fig. 2 den für die Erfindung wesentlichen Teil des Vorschubgerätes, zum Teil im Schnitt, und zwar um 90° gedreht.

Die zur Feststellung von Materialdiskontinuitäten dienende Ultraschallsonde besitzt als wesentlichen Teil den drehbaren Prüfkopf 1, der in einer Führungsspitze 2 und einem Mittelteil 3 drehbar gelagert ist. An das Mittelteil 3 schließt sich ein weiteres Führungsteil 4 mit einem Abdichtungskörper 5 an, an dem ein Schubschlauch 6 befestigt ist. Zwischen dem Führungsteil 4 und dem Mittelteil 3 ist eine Steckverbindung 7 mit einem Bajonettverschluß vorgesehen.

Der Schubschlauch 6 ist ein im Querschnitt kreisförmiger Kunststoffschlauch mit einem Außendurchmesser von 18 mm und einer Wandstärke von 1,5 mm und besteht zum Beispiel aus Polyäthylen. Er besitzt eine Perforierung mit kreisförmigen Löchern 8, die einen Durchmesser von 3,5 mm haben und mit einer Distanz T von 18 mm längs einer Mantellinie 9 angeordnet sind.

Zum Prüfen von Rohren eines nicht weiter dargestellten Dampferzeugers in einem Kernkraftwerk, vorzugsweise mit einem Druckwasserreaktor, wird der Schubschlauch 6 mit dem in Fig. 2 dargestellten Vorschubgerät 10 in Bewegung gesetzt. Dazu ist er zwischen zwei gleichen Antriebsrädern 12, 13 und drei diesen symmetrisch gegenüberliegenden Anpreßrädern 15, 16 und 17 geführt.

Die Antriebsräder 12, 13 werden von einem nicht dargestellten Elektromotor in Bewegung gesetzt. Dabei transportieren sie den Schubschlauch 6 im Normalfall durch Reibschluß mit der zylindrischen Oberfläche 20, an der er seitlich mit Randleisten 21 geführt ist. Bei größeren Schubkräften werden dann Dorne 22 wirksam, die in die Bohrungen 8 des Schubschlauches 6 greifen.

Die zylindrischen Dorne 22 mit 2,8 mm Durchmesser sind von innen in die Hohlzylinder 24 der Antriebsräder 12, 13 eingefügt. Ihr freies Ende ragt mit einer halbkugeligen Spitze 25 um 3 mm aus der Oberfläche 20 hinaus. Dies entspricht praktisch der Größe des Durchmessers von 2,8 mm und ist so weit größer als die Wanddicke des Schubschlauches 6, daß dieser mit dem zylindrischen Bereich der Dorne 22 in Berührung steht.

In jedem Antriebsrad 12, 13 sind zehn Dorne 22 gleichmäßig verteilt angeordnet. Die Anordnung der Dorne ist jedoch in den beiden Antriebsrä-

dern um den halben Teilungswinkel, d.h. um 18°, versetzt, wie Fig. 2 deutlich zeigt. Deshalb ist stets mindestens ein Dorn 22 in ausreichendem Eingriff mit dem Schubschlauch 6.

Die Anpreßrader 15, 16, 17, die bei Bedarf ebenfalls angetrieben werden können, haben im Querschnitt eine dem Umfang des Schubschlauches 6 angepaßte Wölbung. Ihr Abstand von den Antriebsrädern 12, 13 ist mit einem Handrad 26 einstellbar, vor allem, um das Einführen des Schubschlauches 6 zu erleichtern.

Die für die Prüfung von Dampferzeugerrohren beschriebene Ausbildung des Schubschlauches 6 kann auch bei Inspektionseinrichtungen für andere Wärmetauscher eingesetzt werden, die wegen chemischer Aggressivität und Giftigkeit oder höherer Temperatur durch Fernbedienung geprüft werden sollen. Ferner kommen als Inspektionsgeräte auch Wirbelstromsonden oder Endoskope in Frage.

## Patentansprüche

1. Inspektionseinrichtung, insbesondere für Dampferzeugerrohre, mit einer Sonde (1 bis 5,7), die mit Hilfe eines Schubschlauches (6) von einem den Schubschlauch (6) mit Antriebsrädern (12, 13) erfassenden Vorschubgerät (10) bewegt wird, dadurch gekennzeichnet, daß der Schubschlauch (6) längs einer Mantellinie (9) äquidistante Löcher (8) aufweist und daß mindestens ein Antriebsrad (12, 13) in die Löcher (8) passende Dorne (22) trägt.

2. Inspektionseinrichtung nach Anspruch 1, dadurch gekennzeichnet, daß die Dorne (22) zugespitzt sind.

3. Inspektionseinrichtung nach Anspruch 1 oder 2, dadurch gekennzeichnet, daß die Löcher (8) und Dorne (22) einen Kreisförmigen Querschnitt aufweisen.

4. Inspektionseinrichtung nach Anspruch 1, 2 oder 3, dadurch gekennzeichnet, daß die Distanz (T) zwischen je zwei Löchern (8) so groß wie der Durchmesser des Schubschlauches (6) mit einer möglichen Abweichung von 15 % nach oben oder unten ist.

5. Inspektionseinrichtung nach anspruch 3, dadurch gekennzeichnet, daß der Lochdurchmesser 1/3 bis 1/10 der Distanz (T) zwischen je zwei Löchern (8) beträgt.

6. Inspektionseinrichtung nach Anspruch 3, dadurch gekennzeichnet, daß der Lochdurchmesser das 0,5 bis 2,5 fache der Wanddicke des Schubschlauches (6) beträgt.

7. Inspektionseinrichtung nach einem der Ansprüche 1 bis 6, dadurch gekennzeichnet, daß zwei Antriebsräder (12, 13) versetzt angeordnete Dorne (22) tragen.

## Claims

1. An inspection device, in particular for steam generator pipes, comprising a probe (1 and 5, 7) which is moved by a feeding device (10) with the aid of a thrust tube (6) which is moved by the feeding device by means of drive wheels (12, 13), characterised in that along a surface line (9) the thrust tube (6) has equidistantly spaced apertures (8); and that at least one drive wheel (12, 13) carries pegs (22) which fit into the apertures (8).

2. An inspection device as claimed in Claim 1, characterised in that the pegs (22) are pointed.

3. An inspection device as claimed in Claim 1 or Claim 2, characterised in that the apertures (8) and the pegs (22) have a circular cross-section.

4. An inspection device as claimed in Claim 1, 2 or 3, characterised in that the distance (T) between two apertures (8) is as great as the diameter of the thrust tube (6) with a possible deviation of ±15 %.

5. An inspection device as claimed in Claim 3, characterised in that the aperture diameter is 1/3 to 1/10 of the distance (T) between two apertures (8).

6. An inspection device as claimed in Claim 3, characterised in that the aperture diameter is 0.5 to 2.5 times the wall thickness of the thrust tube (6).

7. An inspection device as claimed in one of Claims 1 to 6, characterised in that two drive wheels (12, 13) carry staggered pegs (22).

## Revendications

1. Dispositif d'inspection, notamment pour des tubes de générateurs de vapeur, comprenant une sonde (1 à 5, 7), qui est déplacée à l'aide d'un tube souple de poussée (6) par un appareil d'avancement (10) saisissant le tube souple de poussée (6) par des roues d'entraînement (12, 13), caractérisé en ce que le tube souple de poussée (6) présente des trous (8) équidistants le long d'une génératrice (9), et en ce qu'au moins une roue d'entraînement (12, 13) porte des chevilles (22) s'adaptant dans les trous (8).

2. Dispositif d'inspection suivant la revendication 1, caractérisé en ce que les chevilles (22) sont taillées en pointe.

3. Dispositif d'inpection suivant la revendication 1 ou 2, caractérisé en ce que les trous (8) et les chevilles (22) présentent une section transversale de forme circulaire.

4. Dispositif d'inspection suivant la revendication 1, 2 ou 3, caractérisé en ce que la distance (T) entre deux trous (8) est aussi grande que le diamètre du tube souple de poussée (6) avec un écart possible de 15 % en plus ou en moins.

5. Dispositif d'inspection suivant la revendication 3, caractérisé en ce que le diamètre des trous représente du 1/3 au 1/10 de la distance (T) comprise entre deux trous (8).

6. Dispositif d'inspection suivant la revendication 3, caractérisé en ce que le diamètre des trous représente de 0,5 à 2,5 fois l'épaisseur de la paroi du tube souple de poussée (6).

7. Dispositif d'inspection suivant l'une des revendications 1 à 6, caractérisé en ce que deux roues d'entraînement (12, 13) portent des chevilles (22) disposées de manière décalée.

FIG 1

0 086 342

FIG 2